# EUROPÄISCHE PATENTSCHRIFT

(11) **EP 0 647 792 B1**
(45) Veröffentlichungstag und Bekanntmachung des Hinweises auf die Patenterteilung: **20.08.1997**
(21) Anmeldenummer: 94109454.2
(22) Anmeldetag: 18.06.1994
(51) Int. Cl.: F16D 13/64

(54) **Reibungskupplung mit erhöhter Übertragungsfähigkeit**
Friction clutch with increased transmission capacity
Embrayage à friction avec capacité de transmission augmentée

(30) Priorität: 08.10.1993 DE 4334374
(43) Veröffentlichungstag der Anmeldung: 12.04.1995
(73) Patentinhaber: FICHTEL & SACHS AG, D-97424 Schweinfurt (DE)
(72) Erfinder: Drexl, Hans-Jürgen, Dr.-Ing., D-97453 Schonungen (DE)

(56) Entgegenhaltungen:
- EP-A- 0 552 387
- DE-A- 4 114 100
- DE-C- 625 868
- FR-A- 794 147
- Handbuch der Kraftfahrzeugtechnik, Ausgabe 1976, Seiten 514 bis 521

## Beschreibung

Die Erfindung bezieht sich auf eine Kupplungsscheibe für eine Reibungskupplung, umfassend eine Nabe zum drehfesten Aufsetzen auf eine Getriebewelle, die eine Drehachse definiert, eine Nabenscheibe mit oder ohne Torsionsschwingungsdämfer, einen Träger für zwei axial voneinander beanstandete Reibringe, die konzentrisch zur Drehachse angeordnet und am Träger befestigt sind und die einen Innendurchmesser und einen Außendurchmesser aufweisen.

Eine Kupplungsscheibe der o. g. Bauart mit einem Verhältnis von Außen- zu Innendurchmesser gleich 1,52 ist aus EP-A-0 552 387 bekannt.

Entsprechende Durchmesserverhältnisse von 1,43 bis 1,66 sind weiterhin aus "Handbuch der Kraftfahrzeugtechnik", Ausgabe 1976, Seiten 514 bis 521 bekannt.

Es ist Aufgabe der vorliegenden Erfindung, die Übertragungsfähigkeit einer solchen Kupplungsscheibe mit möglichst geringem Aufwand zu erhöhen.

Erfindungsgemäß wird diese Aufgabe durch den kennzeichnenden Teil des Hauptanspruchs gelöst. Es hat sich herausgestellt, daß bei einem Durchmesserverhältnis von Außendurchmesser zu Innendurchmesser von 1,25 bis 1,38 die Übertragungsfähigkeit der Kupplungsscheibe einen größeren Wert annehmen kann, als bei einem herkömmlichen Durchmesserverhältnis. Dies ist darauf zurückzuführen, daß während der Rutschphase der Reibungskupplung und während der Erwärmung der Reibringe diese bei dem vorgeschlagenen Durchmesserverhältnis einer geringeren Verwerfung unterliegen, so daß ein größerer Anteil der Reibfläche der Reibringe an den Gegenreibflächen der Reibungskupplung anliegen kann. Dadurch ist sichergestellt, daß die entstehende Reibungswärme sich gleichmäßiger auf das Material der Reibringe verteilen kann, somit die Spitzenbelastungen stark abgesenkt werden können und ein Maximum der Übertragungsfähigkeit vorliegt, ohne daß weitere Maßnahmen getroffen werden müssen.

Eine besonders vorteilhafte Ausbildung der Reibringe sieht vor, daß deren Durchmesserverhältnis im Bereich von 1,3 liegt. Bei diesem Durchmesserverhältnis ist ein Optimum gefunden zwischen geringer Verwerfung bei Temperaturbelastung durch Reibarbeit während des Schlupfvorganges und deren Wärmekapazität der Reibringe.

Bei einer Kupplungsscheibe, bei der beide Reibringe unter Zwischenschaltung einer im wesentlichen axial wirkenden Federeinrichtung am Träger befestigt sind, wird entsprechend der Erfindung vorgeschlagen, daß im eingerückten Zustand der Reibungskupplung ein Restfederweg vorgesehen ist. Ein solcher Restfederweg ermöglicht es, den Reibringen, im bestimmten Umfang bei Verwerfung infolge Temperaturbeaufschlagung, geringfügig elastisch nachzugeben.

Dabei wird vorgeschlagen, daß der Restfederweg einen Betrag von 0,10 bis 0,30 mm aufweist. Ein solcher Restfeder ist für den erwünschten Effekt einerseits ausreichend groß, andererseits ist sein Raumbedarf noch ausreichend klein.

Die Erfindung wird anschließend anhand eines Beispieles näher erläutert. Es zeigen im einzelnen:
- Fig. 1: Die Ansicht eines Reibringes;
- Fig. 2: den Schnitt durch die obere Hälfte einer Kupplungsscheibe unter Verwendung von Reibringen entsprechend Fig. 1.

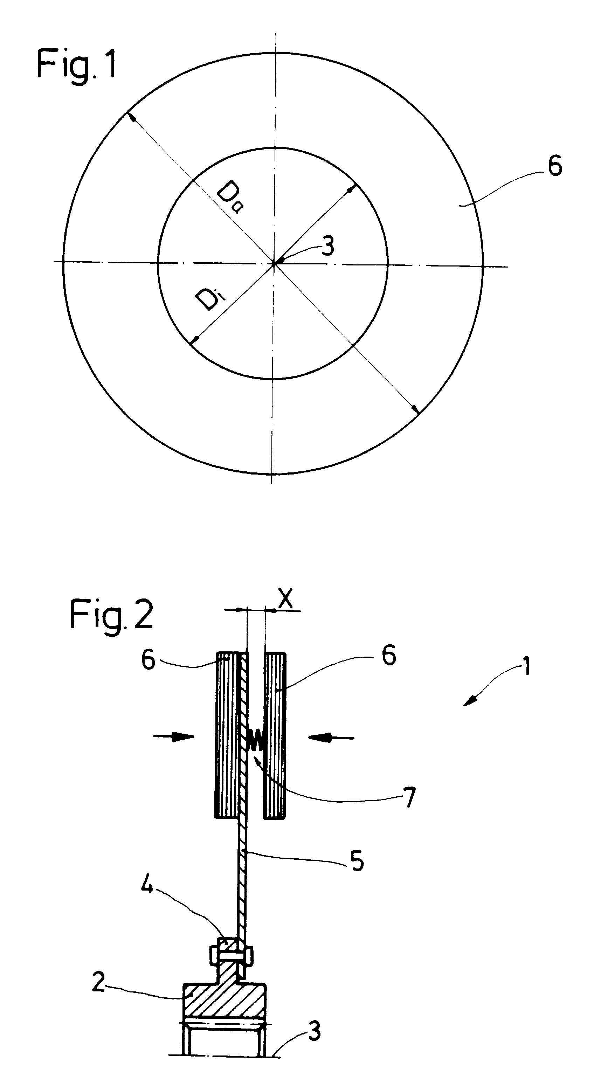

Die Kupplungsscheibe 1 ist konzentrisch zu einer Drehachse 3 angeordnet. Sie umfaßt eine Nabe 2, die auf eine nicht dargestellte Getriebewelle drehfest aufgesetzt werden kann. An der Nabe 2 ist eine Nabenscheibe 4 angeordnet, an der ein Träger 5 befestigt ist, der sich nach radial außen erstreckt. Am Träger 5 oder zwischen Träger 5 und Nabenscheibe 4 kann auch ein Torsionsschwingungsdämpfer angeordnet sein. Im radial äußeren Bereich des Trägers 5 sind auf beiden Seiten je ein Reibring 6 befestigt, wobei zwischen beiden Reibringen 6 eine Federeinrichtung 7 vorgesehen ist. Diese kann beispielsweise sowohl zwischen beiden Reibringen 6 wirksam sein als auch zwischen einem Reibring und dem Träger 5. Beide Reibringe 6 weisen ein Durchmesserverhältnis vom Außendurchmesser Dₐ zum Innendurchmesser Dᵢ auf, welches kleiner oder gleich 1,4 ist und welches inbesondere im Bereich von etwas 1,3 liegt. In diesem Bereich für das Durchmesserverhältnis kann die Kupplungsscheibe 1 eine max. Reibarbeit aufnehmen, wie sie beispielsweise beim mehrmaligen Anfahren am Berg auftritt. Unterstützt wird die Reibarbeitsaufnahme noch dadurch, daß eine Federeinrichtung 7 vorgesehen ist, die bei voll eingerückter Kupplung und entsprechender Belastung der Reibringe 6 durch Anpreßplatte und Gegenanpreßplatte der Reibungskupplung entsprechend den bei den Fig. 2 dargestellten Pfeilen einen Restfederweg X realisiert. Dieser Restfederweg X liegt in vorteilhafter Weise im Bereich von 0,10 bis 0,30 mm.

## Patentansprüche

1. Kupplungsscheibe für eine Reibungskupplung, umfassend eine Nabe zum drehfesten Aufsetzen auf eine Getriebewelle, eine Nabenscheibe mit oder ohne Torsionsschwingungsdämpfer, einen Träger für zwei axial voneinander beanstandete Reibringe, die konzentrisch zur Drehachse angeordnet und am Träger befestigt sind und die einen Innendurchmesser und einen Außendurchmesser aufweisen,
dadurch gekennzeichnet,
daß das Durchmesserverhältnis von Außendurchmesser (Da) zu Innendurchmesser (Dᵢ) im Bereich von 1,25 bis 1,38 liegt.

2. Kupplungsscheibe nach Anspruch 1,
dadurch gekennzeichnet,
daß das Durchmesserverhältnis von Außendurchmesser (Dₐ) zu Innendurchmesser (Dᵢ) etwa im Bereich von 1,3 liegt.

3. Kupplungsscheibe nach Anspruch 1, wobei die beiden Reibringe unter Zwischenschaltung einer im wesentlichen axialen Federeinrichtung am Träger befestigt sind,
dadurch gekennzeichnet,
daß im eingerückten Zustand der Reibungskupplung ein Restfederweg (X) vorgesehen ist.

4. Kupplungsscheibe nach Anspruch 3,
dadurch gekennzeichnet,
daß der Restfederweg (X) einen Betrag von 0,10 bis 0,30 aufweist.

## Claims

1. Clutch plate for a friction clutch comprising a hub for mounting on a gearbox shaft to rotate with it, a hub disc with or without torsional vibration damper, a carrier for two axially spaced friction rings which are arranged concentric with the axis of rotation and are secured to the carrier and have an inside diameter and an outside diameter,
characterised in that,
the ratio of outside diameter (Da) to inside diameter (Dᵢ) lies in the range from 1.25 to 1.38.

2. Clutch plate according to claim 1,
characterised in that,
the ratio of outside diameter (Dₐ) to inside diameter (Dᵢ) lies approximately in the region of 1.3.

3. Clutch plate according to claim 1, the two friction rings being secured to the carrier with the interposition of a substantially axially acting spring device,
characterised in that,
a residual spring travel (X) is provided with the clutch in its engaged state.

4. Clutch plate according to claim 3,
characterised in that,
the residual spring travel (X) amounts to 0.10 to 0.30.

## Revendications

1. Disque d'embrayage pour un embrayage à friction, comportant un moyeu pour l'agencement solidaire en rotation sur un arbre de transmission, un disque de moyeu avec ou sans amortisseurs d'oscillation de torsion, un support pour deux anneaux de friction écartés axialement l'un de l'autre qui sont agencés concentriquement à l'axe de rotation et fixés sur le support, et qui présentent un diamètre intérieur et un diamètre extérieur, caractérisé en ce que la relation du diamètre extérieur (Dₐ) par rapport au diamètre intérieur (Dᵢ) est de l'ordre de 1,25 à 1,38.

2. Disque d'embrayage selon la revendication 1, caractérisé en ce que la relation du diamètre extérieur (Dₐ) par rapport au diamètre intérieur (Dᵢ) est de l'ordre d'environ 1,3.

3. Disque d'embrayage selon la revendication 1, caractérisé en ce que les deux anneaux de friction sont fixés sur le support avec interposition d'un dispositif élastique sensiblement axial, caractérisé en ce qu'il est prévu une course élastique restante (X) à l'état embrayé de l'embrayage.

4. Disque d'embrayage selon la revendication 3, caractérisé en ce que la course élastique restante (X) présente une valeur de 0,10 à 0,30.
